# EUROPÄISCHE PATENTSCHRIFT

(11) **EP 3 194 745 B1**
(45) Veröffentlichungstag und Bekanntmachung des Hinweises auf die Patenterteilung: **31.10.2018**
(21) Anmeldenummer: 15741974.8
(22) Anmeldetag: 17.07.2015
(51) Int. Cl.: F02B 37/16, F16K 31/06

(54) **VERSTELLORGAN FÜR EIN SCHUBUMLUFTVENTIL**
ADJUSTMENT ELEMENT FOR AN OVERRUN AIR RECIRCULATION VALVE
ORGANE DE RÉGLAGE POUR SOUPAPE DE SURPRESSION

(30) Priorität: 19.09.2014 DE 102014113550
(43) Veröffentlichungstag der Anmeldung: 26.07.2017
(73) Patentinhaber: Pierburg GmbH, 41460 Neuss (DE)
(72) Erfinder: SCHMITZ, Helmut, 41469 Rommerskirchen (DE); LENK, Martin, 41470 Neuss (DE); PAUL, Oliver, 45896 Gelsenkirchen (DE); MANDJERALO, Daniel, 40549 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2015/066453
(87) Internationale Veröffentlichungsnummer: WO 2016/041659

(56) Entgegenhaltungen:
- WO-A1-96/17193
- DE-B3-102012 224 130

## Beschreibung

Die Erfindung betrifft ein Verstellorgan für ein Schubumluftventil mit einem translatorisch bewegbaren Betätigungsglied und einem Regelkörper, welcher mit dem Betätigungsglied bewegbar ist.

Schubumluftventile zur Rezirkulation von verdichtetem Frischgas gegebenenfalls mit zurückgeführtem Abgas von der Druckseite eines Verdichters eines Turboladers zurück zur Saugseite des Verdichters sind hinlänglich bekannt. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern.

Schubumluftventile werden häufig elektromagnetisch betätigt, wobei der Ventilschließkörper des Ventils über den Anker durch die elektromagnetische Kraft bewegt wird. Ein Beispiel einer solchen Anordnung wird in der DE 100 20 041 A1 beschrieben. Die Ansteuerung erfolgt über eine Steuereinheit entsprechend vorhandener Motordaten. Das Ventil weist eine Druckausgleichsöffnung am Ventilschließkörper auf, wodurch bei entsprechender Auslegung der wirksamen Flächen ein Kräftegleichgewicht bezüglich der pneumatischen Kräfte hergestellt wird. Bei diesem Ventil ist der Verschlusskörper direkt mit dem Anker verbunden und das Innere des Ventils ist über eine Membran vom Außenbereich getrennt. Im Anker und im Verschlusskörper ist eine Bohrung ausgebildet, über die ein Druckausgleich zwischen der Druckseite des Turboladers und dem Inneren des Ventils hergestellt wird.

Bei den folgenden Generationen von Schubumluftventilen wird in der Regel auf eine Membran verzichtet, so dass ein im Wesentlichen zylindrischer Regelkörper verwendet wird, der kardanisch mit dem Anker verbunden ist und der im radial äußeren Bereich statt über eine Membran über einen Dichtring abgedichtet ist. Ein solches Schubumluftventil ist beispielsweise aus der DE 10 2010 026 121 A1 bekannt. Der im Wesentlichen zylindrische Regelkörper weist an seinem zum Anker weisenden Ende eine Einschnürung auf, hinter die eine Erweiterung einer Gleithülse greift, die mit dem Anker verbunden ist, so dass der Anker mit der Gleithülse und dem Regelkörper vom Ventilsitz abgehoben oder auf diesen abgesenkt wird.

In anderen Veröffentlichungen, wie der WO 2014/102133 A1 oder der DE 10 2004 044 439 B4 ist direkt am Anker eine Einschnürung mit einer folgenden Erweiterung ausgebildet, so dass der Regelkörper nach dem Einschieben über die Erweiterung in die Einschnürung greift und so formschlüssig befestigt wird. Hierzu sind am Regelkörper nach radial innen weisende, federnde Elemente vorzusehen. Entsprechend wird der Regelkörper üblicherweise als Kunststoffbauteil hergestellt, der jedoch bezüglich seiner thermischen Belastbarkeit begrenzt ist.

Die zum Ventilsitz weisenden Enden dieser Regelkörper bestehen aus dem axialen Ende ihrer zylindrischen Mantelfläche. Diese Ausführungen haben entsprechend den Nachteil, dass für unterschiedliche Drücke erzeugende Turbolader jeweils neue Formen für die Regelkörper hergestellt werden müssen, die in ihrem Durchmesser an die abzudichtenden Querschnitte angepasst sind. Des Weiteren sind diese so für die steigenden Betriebstemperaturen aufgrund des zu verwendenden Kunststoffmaterials häufig nicht geeignet. Auch entstehen Probleme durch zu laute Schließ- und Öffnungsbewegungen. Vor allem können Probleme mit der Dichtigkeit auftreten.

Es stellt sich daher die Aufgabe, ein Verstellorgan für ein Schubumluftventil zur Verfügung zu stellen, welches möglichst geräuscharm öffnet und schließt, kostengünstig herstellbar, thermisch belastbar ist und eine hohe Dichtigkeit aufweist. Des Weiteren sollen Herstellkosten durch eine mögliche Anpassung an verschiedene abzudichtende Querschnitte gesenkt werden.

Diese Aufgabe wird durch ein Verstellorgan mit den Merkmalen des Hauptanspruchs 1 gelöst.

Dadurch, dass der Regelkörper einen ersten Hohlkörper mit einer umfänglich geschlossenen Mantelfläche aufweist, von deren ersten axialen Ende sich nach radial innen eine ringförmige Platte erstreckt, und einen zweiten Hohlkörper aufweist, der eine radial äußere ringförmige Platte aufweist, die axial an der ringförmigen Platte des ersten Hohlkörpers umlaufend dicht befestigt ist und von deren radial inneren Bereich sich eine Mantelfläche in Richtung des Betätigungsgliedes im Inneren des ersten Hohlkörpers erstreckt, wird erreicht, dass der Regelkörper einfach bezüglich seines Absperrquerschnitts angepasst werden kann. Durch die einfache Formgebung der Einzelteile ist das Verstellorgan einfach und kostengünstig herstellbar und es können thermisch beständige Materialien, wie Blech gewählt werden. Eine Dichtigkeit zwischen den Teilen kann ebenfalls sichergestellt werden.

Vorzugsweise ist die Mantelfläche des ersten Hohlkörpers zylindrisch ausgebildet. Eine solche Form ist besonders einfach herstellbar und es wird eine Abdichtung am Außenumfang über den gesamten Hubbereich sichergestellt.

In einer hierzu alternativen Ausführung ist die Mantelfläche des ersten Hohlkörpers sich in Richtung zum Betätigungsglied konisch erweiternd ausgebildet. Auf diese Weise wird ein dichter Verschluss im geschlossenen Zustand des Ventils sichergestellt, während bei der Hubbewegung der Verschleiß an der umliegenden Dichtung minimiert wird.

In der Mantelfläche des zweiten Hohlkörper ist vorteilhafterweise mindestens eine Öffnung ausgebildet, über die auf einfache Weise der Druckausgleich zwischen der Unterseite des Verstellorgans und dem Innenraum des Ventils hergestellt werden kann.

In einer bevorzugten Ausführung ist der Regelkörper fest mit dem Betätigungsglied verbunden. Dies kann entweder direkt oder über zwischengeordnete Bauteile erfolgen. In jedem Fall wird eine direkte Bewegungskopplung des üblicherweise als Anker ausgebildeten Betätigungsgliedes und dem Regelkörper sichergestellt.

Vorzugsweise ist am Betätigungsglied ein Verbindungselement befestigt, welches sich in das Innere des zweiten Hohlkörpers erstreckt und an seinem vom Betätigungsglied weg weisenden Ende eine radiale Erweiterung aufweist, und weist der zweite Hohlkörper eine korrespondierende radiale Einschnürung auf, die axial zwischen dem Betätigungsglied und der radialen Erweiterung des Verbindungselementes angeordnet ist, wobei der Außenumfang der radialen Erweiterung des Verbindungselementes größer ist als der Innenumfang der radialen Einschnürung des zweiten Hohlkörpers. Hierdurch wird auf einfache Weise eine Befestigung des Regelkörpers am Betätigungselement erzeugt, mit der ein Kippen des Regelkörpers relativ zum Betätigungsglied zugelassen wird, ohne dass eine Verformung eines der Bauteile bei der Befestigung erforderlich ist.

In einer hierzu weiterführenden Ausbildung der Erfindung ist das Verbindungselement in einer zentralen Ausnehmung am Betätigungsglied befestigt, deren Durchmesser dem Außendurchmesser des Verbindungselementes im in die Ausnehmung ragenden Bereich entspricht. Das Verbindungselement dient so gleichzeitig zur Zentrierung des Regelkörpers zum Betätigungsglied. Dies vereinfacht den Zusammenbau des Verstellorgans.

Vorzugsweise ist zwischen dem Verbindungselement und dem zweiten Hohlkörper ein Elastomer angeordnet, wodurch eine gedämpfte Bewegung zwischen dem Verbindungselement und dem Regelkörper ermöglich wird. So wird einerseits ein leichtes Kippen des Regelkörpers zugelassen als auch eine Geräuschdämpfung bei der Bewegung erzielt.

Hierzu erstreckt sich das Elastomer in einer weiterführenden Ausführungsform vom Betätigungsglied bis zur radialen Erweiterung des Verbindungselementes und füllt einen Raum, der axial zwischen der radialen Erweiterung des Verbindungselementes und der radialen Einschnürung des zweiten Hohlkörpers angeordnet ist, aus. Entsprechend wirkt das Elastomer sowohl in Axialrichtung als auch in radialer Richtung dämpfend und kann, falls gewünscht, axial den Raum zwischen dem Befestigungselement und dem zweiten Hohlkörper abdichten. Des Weiteren kann der Elastomere so ausgeführt sein, dass er ganz oder teilweise am Umfang gleichförmig oder ungleichförmig verteilte axiale Verbindungen aufweist, welche einen Druckausgleich zwischen dem Innenraum und dem Druckraum vor dem Verschlusskörper bereitstellt.

Zur Erzeugung der Druckausgeglichenheit des Verstellorgans im Ventil sind im zweiten Hohlkörper mehrere über den Umfang verteilte Öffnungen in einem Bereich zwischen der radialen Einschnürung des zweiten Hohlkörpers und der ringförmigen Platte des zweiten Hohlkörpers ausgebildet. Diese können auf einfache Weise beispielsweise durch Stanzen hergestellt werden und bieten einen ausreichenden Durchströmungsquerschnitt für einen schnellen Druckausgleich bei sich plötzlich ändernden Drücken.

An der vom Betätigungsglied entfernten Seite der ringförmigen Platte des zweiten Hohlkörpers ist vorteilhafterweise ein Dichtring befestigt, dessen Durchmesser dem größten Durchmesser des ersten Hohlkörpers entspricht. Dies führt einerseits zu einem dichten Verschluss bei Auflage auf dem Ventilsitz und andererseits zu gleichen Kraftangriffsflächen an den axial gegenüberliegenden Seiten des Verstellorgans, so dass ein Kräftegleichgewicht entsteht, welches geringe Verstellkräfte benötigt und dadurch extrem kurze Betätigungszeiten sicherstellt.

Vorzugsweise ist radial zwischen den beiden Hohlkörpern eine Feder angeordnet, welche auf der sich nach radial innen erstreckenden Platte des ersten Hohlkörpers axial vorgespannt aufliegt. Hierdurch wird eine Rückstellung des Verstellorgans in seine den Kanal verschließende Position sichergestellt. Die Feder ist hier besonders einfach zu montieren.

In einer bevorzugten Ausbildung der Erfindung sind die beiden Hohlkörper und das Verbindungselement als Tiefziehteile aus Blech hergestellt. Entsprechend kann das Verschlussorgan sehr kostengünstig hergestellt werden, wobei gleichzeitig eine hohe Festigkeit, Korrosionsbeständigkeit und thermische Belastbarkeit die Folge sind.

Vorteilhafterweise sind die beiden Hohlkörper aneinander und/oder das Verbindungselement am Betätigungsglied durch Schweißen, Kleben, Bördeln oder Krimpen befestigt. Diese Verbindungstechniken sind ebenfalls kostengünstig durchzuführen und sichern eine lange Haltbarkeit der Verbindung.

Es wird somit ein Verstellorgan für ein Schubumluftventil geschaffen, welches eine hohe Haltbarkeit und Dichtheit sicherstellt und kostengünstig hergestellt werden kann. Des Weiteren ist eine Anpassung an andere Querschnitte auf einfache Weise möglich, ohne Formen ändern zu müssen. Dieses Verschlussorgan kann geräuscharm geschaltet werden und ist thermisch belastbar.

Ein Ausführungsbeispiel eines Schubumluftventils mit einem erfindungsgemäßen Verschlussorgan ist in den Figuren dargestellt und wird nachfolgend beschrieben.
Figur 1 zeigt eine Seitenansicht eines Schubumluftventils mit erfindungsgemäßem Verstellorgan in geschnittener Darstellung.

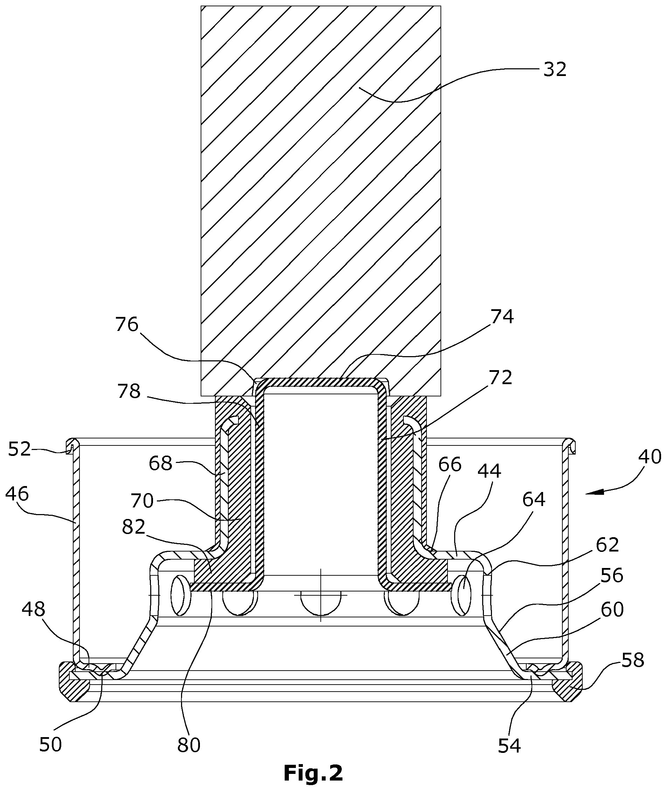

Figur 2 zeigt eine Seitenansicht des erfindungsgemäßen Stellorgans in geschnittener Darstellung.

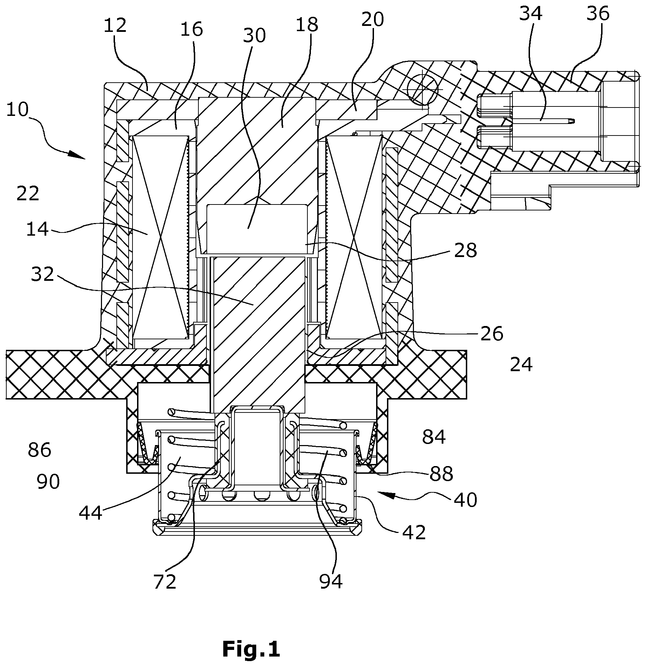

Das in Figur 1 dargestellte Schubumluftventil besteht aus einem elektromagnetischen Steller 10, in dessen Gehäuse 12 eine Spule 14 auf einem Spulenträger 16 angeordnet ist. Im radial inneren Bereich des Spulenträgers 16 ist ein magnetisierbarer Kern 18 befestigt, dessen axiales Ende über den Spulenträger 16 hinausragt, wobei der Kern 18 an diesem axialen Ende von einem Rückschlussblech 20 umgeben ist, welches in Verbindung mit einem die Spule umgebenden Joch 22 steht. Am zum Kern 18 entgegengesetzten Ende des Spulenträgers 16 befindet sich ein weiteres Rückschlussblech 24, welches im radial äußeren Bereich mit dem Joch 22 in Kontakt steht und einen inneren axialen Erstreckungsabschnitt 26 aufweist, der sich in den Spulenträger 16 erstreckt. Im radial Inneren dieses Abschnitts 26 ist eine Führungshülse 28 angeordnet, welche sich bis in eine zentrale Ausnehmung 30 des Kerns 18 erstreckt und in der ein als Betätigungsglied 32 wirkender Anker gelagert ist. Die Spule 14 kann über Leitungen 34, die in einem Stecker 36 münden, mit Strom versorgt werden.

Sobald auf diese Weise in der Spule 14 ein ausreichend großer Strom fließt, wird ein magnetisches Feld erzeugt, durch welches das Betätigungsglied in Richtung des Kerns 18 verstellt wird.

Das Betätigungsglied 32 dient somit als erstes Bauteil eines Verstellorgans 38, welches zusätzlich einen am Betätigungsglied 32 befestigten Regelkörper 40 aufweist, mittels dessen ein Durchströmungsquerschnitt zwischen einem Einlass und einem Auslass eines nicht dargestellten Strömungsgehäuses freigegeben oder abgesperrt werden kann, indem der Regelkörper 40 auf einen den Durchströmungsquerschnitt umgebenden Ventilsitz abgesenkt oder von diesem abgehoben wird.

Erfindungsgemäß besteht der Regelkörper 40 aus einem ersten Hohlkörper 42 und einem zweiten Hohlkörper 44, der im radial Inneren des ersten Hohlkörpers 42 angeordnet ist. Der erste Hohlkörper 42 weist eine über den Umfang geschlossene zylindrische Mantelfläche 46 auf, an deren vom Betätigungsglied 32 weg weisenden Ende eine ringförmige Platte 48 ausgebildet ist, die sich radial nach innen erstreckt. An der Platte 48 ist zusätzlich eine ringförmige vom Steller 10 weg weisende Ausbuchtung 50 eingeprägt. Das entgegengesetzte axiale Ende 52 des ersten Hohlkörpers 42 ist vollständig nach außen umgebogen, um scharfe Kanten an der zum Steller 10 weisenden Seite zu vermeiden. Dieser Hohlkörper 42 ist aus Blech durch Tiefziehen hergestellt.

Der zweite Hohlkörper 44 wird ebenfalls durch Tiefziehen aus Blech hergestellt und weist eine radial äußere ringförmige Platte 54 auf, von deren Innenumfang aus sich eine Mantelfläche 56 in den inneren Bereich des ersten Hohlkörpers 42 erstreckt, dessen ringförmige Platte 48 axial zwischen dem Steller 10 und der ringförmigen Platte 54 des zweiten Hohlkörpers angeordnet ist und mit seiner Ausbuchtung 50 auf der ringförmigen Platte 54 aufliegt und dort mit dieser umlaufend verschweißt ist. Im radial äußeren Bereich der ringförmigen Platte 54 des zweiten Hohlkörpers ist ein Dichtring 58 angespritzt, dessen wirksamer Durchmesser zur Auflage auf dem Ventilsitz dem Durchmesser der zylindrischen Mantelfläche 46 des ersten Hohlkörpers 42 entspricht. Die Mantelfläche 56 des zweiten Hohlkörpers verjüngt sich in einem ersten Abschnitt 60 konisch, an den sich ein zylindrischer Abschnitt 62 axial anschließt, in dem zehn Radialbohrungen ausgebildet sind, die als Öffnungen 64 zum Druckausgleich dienen. An diesen zylindrischen Abschnitt 62 schließt sich eine radiale Einschnürung 66 an, von deren Innendurchmesser sich ein weiterer zylindrischer Abschnitt 68 in Richtung des Betätigungsgliedes 32 erstreckt, der entsprechend einen kleineren Durchmesser aufweist als der erste zylindrische Abschnitt 62. An seinem axialen Ende ist der zylindrische Abschnitt 68 geringfügig nach innen gebogen.

Der zylindrische Abschnitt 68 sowie der radial innere Teil der Einschnürung 66 sind mit einem Elastomer 70 umspritzt, welches in Richtung zum Betätigungsglied über den zylindrischen Abschnitt 68 ragt und gegen das Betätigungsglied 32 anliegt.

Um den Regelkörper 40 am Betätigungsglied zu befestigen, wird ein Verbindungselement 72 verwendet, welches ebenfalls durch Tiefziehen hergestellt wird. Das Verbindungselement 72 ist im Wesentlichen topfförmig ausgebildet, wobei ein Boden 74 in einer zentralen kreisförmigen Ausnehmung 76 am axialen Ende des Betätigungsgliedes 32 angeordnet und an dieser Stelle durch Schweißen befestigt ist. Der sich an den Boden 74 anschließende zylindrische Abschnitt 78 erstreckt sich bis zum vom Betätigungsglied 32 weg weisenden Ende des Elastomers 70 am zweiten Hohlkörper 44 und weist einen Außendurchmesser auf, der kleiner ist als der Innendurchmesser des Elastomers 70. An diesen zylindrischen Abschnitt 78 schließt sich an der zum Boden entgegengesetzten Seite eine radiale Erweiterung 80 in Ringform an, die sich radial etwa bis zum radial nach außen weisenden Ende des Elastomers 70 erstreckt und deren Außendurchmesser somit größer ist als der Innendurchmesser der Einschnürung 66 des zweiten Hohlkörpers 44. Ein beim Zusammenbau des Verstellorgans 38 entstehender Raum 82, der axial zwischen der Einschnürung 66 des zweiten Hohlkörpers 44 und der Erweiterung 80 des Verbindungselementes 72 entsteht ist entsprechend mit dem Elastomer 70 gefüllt, welches bei der Verschweißung des Verbindungselementes 72 am Betätigungsglied 32 geringfügig zusammengedrückt wird.

Im Gehäuse 12 ist ein Raum 84 ausgebildet, in den der Regelkörper bei Betätigung des Ventils eintauchen kann. Dieser Raum 84 wird radial von einer Gehäusewand 86 begrenzt, an deren vom Steller 10 abgewandten Ende eine ringförmige Platte 88 ausgebildet ist, deren Innendurchmesser geringfügig größer ist als der Außendurchmesser des ersten Hohlkörpers 84. Auf dieser Platte liegt eine V-fömige Dichtung 90 mit zwei Schenkeln auf, von denen der erste gegen die umfänglich geschlossene Mantelfläche 46 des ersten Hohlkörpers 42 anliegt und deren zweiter Schenkel gegen die radial begrenzende Gehäusewand 86 anliegt, so dass der Raum 84 im geschlossenen Zustand des Ventils ausschließlich über die Öffnungen 64 mit dem darunter liegenden Kanal verbunden ist. Um auch die zentrale Ausnehmung 30 zwischen dem Betätigungsglied 32 und dem Kern 18 mit einem entsprechenden Druck zu versorgen und so ein druckausgeglichenes Ventil zu schaffen, sind am Außenumfang des Betätigungsgliedes 32 ein oder mehrere Nuten angeordnet. Um des Weiteren sicher zu stellen, dass bei Nichtbestromung der Spule 14 der Regelkörper 40 in seinen auf dem Ventilsitz aufliegenden Zustand gestellt wird, ist im Innern des ersten Hohlkörpers 42 eine Schraubenfeder 94 angeordnet, die gegen die Platte 48 des ersten Hohlkörpers 42 gespannt aufliegt und deren entgegengesetztes axiales Ende gegen das Gehäuse 12 des Stellers 10 anliegt.

Bei Bewegung des erfindungsgemäßen Verstellorgans 38 ist es somit möglich, dass der Regelkörper 40 im Vergleich zum Betätigungsglied 32 geringfügig kippt, um einen sicheren Verschluss herstellen zu können. Dennoch bleiben alle Bewegungen durch den Elastomer 70 gedämpft, wodurch Schaltgeräusche vermieden werden. Der Regelkörper ist einfach und haltbar mit dem Betätigungsglied verbindbar. Des Weiteren ist er kostengünstig mittels Blechtiefziehens herstellbar und thermisch hoch belastbar. Das gesamte System zeichnet sich durch eine hohe Dichtigkeit aus, was zu schnellen Öffnungs- und Verschlusszeiten führt.

Es sollte deutlich sein, dass die vorliegende Erfindung nicht auf das beschriebene Ausführungsbeispiel begrenzt ist. Das erfindungsgemäße Verstellorgan eignet sich auch für andere Steller, so dass das Betätigungsglied nicht zwangsweise ein Anker eines Elektromagneten sein muss. Auch kann ein solches Verstellorgan zur Regelung des Durchströmungsquerschnitts von anderen Flüssigkeiten oder Gas führenden Kanälen verwendet werden. Die Form des Regelkörpers ist ebenfalls innerhalb des Schutzbereich des Hauptanspruchs modifizierbar.

## Patentansprüche

1. Verstellorgan für ein Schubumluftventil mit
einem translatorisch bewegbaren Betätigungsglied (32) und einem Regelkörper (40), welcher mit dem Betätigungsglied (32) bewegbar ist,
**dadurch gekennzeichnet, dass**
der Regelkörper (40) einen ersten Hohlkörper (42) mit einer umfänglich geschlossenen Mantelfläche (46) aufweist, von deren ersten axialen Ende sich nach radial innen eine ringförmige Platte (48) erstreckt, und einen zweiten Hohlkörper (44) aufweist, der eine radial äußere ringförmige Platte (54) aufweist, die axial an der ringförmigen Platte (48) des ersten Hohlkörpers (42) umlaufend dicht befestigt ist und von deren radial inneren Bereich sich eine Mantelfläche (56) in Richtung des Betätigungsgliedes (32) im Inneren des ersten Hohlkörpers (42) erstreckt.

2. Verstellorgan für ein Schubumluftventil nach Anspruch 1,
**dadurch gekennzeichnet, dass**
die Mantelfläche (46) des ersten Hohlkörpers (42) zylindrisch ausgebildet ist.

3. Verstellorgan für ein Schubumluftventil nach Anspruch 1,
**dadurch gekennzeichnet, dass**
die Mantelfläche (46) des ersten Hohlkörpers (42) sich in Richtung zum Betätigungsglied (32) konisch erweiternd ausgebildet ist.

4. Verstellorgan für ein Schubumluftventil nach einem der vorhergehenden Ansprüche,
**dadurch gekennzeichnet, dass**
in der Mantelfläche (56) des zweiten Hohlkörper (44) mindestens eine Öffnung (64) ausgebildet ist.

5. Verstellorgan für ein Schubumluftventil nach einem der vorhergehenden Ansprüche,
**dadurch gekennzeichnet, dass**
der Regelkörper (40) fest mit dem Betätigungsglied (32) verbunden ist.

6. Verstellorgan für ein Schubumluftventil nach Anspruch 5,
**dadurch gekennzeichnet, dass**
am Betätigungsglied (32) ein Verbindungselement (72) befestigt ist, welches sich in das Innere des zweiten Hohlkörpers (44) erstreckt und an seinem vom Betätigungsglied (32) weg weisenden Ende eine radiale Erweiterung (80) aufweist und der zweite Hohlkörper (44) eine korrespondierende radiale Einschnürung (66) aufweist, die axial zwischen dem Betätigungsglied (32) und der radialen Erweiterung (80) des Verbindungselementes (72) angeordnet ist, wobei der Außenumfang der radialen Erweiterung (80) des Verbindungselementes (72) größer ist als der Innenumfang der radialen Einschnürung (66) des zweiten Hohlkörpers (44).

7. Verstellorgan für ein Schubumluftventil nach Anspruch 6,
**dadurch gekennzeichnet, dass**
das Verbindungselement (72) in einer zentralen Ausnehmung (76) am Betätigungsglied (32) befestigt ist, deren Durchmesser dem Außendurchmesser des Verbindungselementes (72) im in die Ausnehmung (76) ragenden Bereich entspricht.

8. Verstellorgan für ein Schubumluftventil nach einem der Ansprüche 6 oder 7,
**dadurch gekennzeichnet, dass**
zwischen dem Verbindungselement (72) und dem zweiten Hohlkörper (44) ein Elastomer (70) angeordnet ist.

9. Verstellorgan für ein Schubumluftventil nach Anspruch 8,
**dadurch gekennzeichnet, dass**
sich das Elastomer (70) vom Betätigungsglied (32) bis zur radialen Erweiterung (80) des Verbindungselementes (72) erstreckt und einen Raum (82), der axial zwischen der radialen Einschnürung (66) des zweiten Hohlkörpers (44) und der radialen Erweiterung (80) des Verbindungselementes (72) angeordnet ist, ausfüllt.

10. Verstellorgan für ein Schubumluftventil nach einem der Ansprüche 5 bis 9,
**dadurch gekennzeichnet, dass**
im zweiten Hohlkörper (44) mehrere über den Umfang verteilte Öffnungen (64) in einem Bereich zwischen der radialen Einschnürung (80) des zweiten Hohlkörpers (44) und der ringförmigen Platte (54) des zweiten Hohlkörpers (44) ausgebildet sind.

11. Verstellorgan für ein Schubumluftventil nach einem der vorhergehenden Ansprüche,
**dadurch gekennzeichnet, dass**
an der vom Betätigungsglied (32) entfernten Seite der ringförmigen Platte (54) des zweiten Hohlkörpers (44) ein Dichtring (58) befestigt ist, dessen Durchmesser dem größten Durchmesser des ersten Hohlkörpers (42) entspricht.

12. Verstellorgan für ein Schubumluftventil nach einem der vorhergehenden Ansprüche,
**dadurch gekennzeichnet, dass**
radial zwischen den beiden Hohlkörpern (42, 44) eine Feder (94) angeordnet ist, welche auf der sich nach radial innen erstreckenden Platte (48) des ersten Hohlkörpers (42) axial vorgespannt aufliegt.

13. Verstellorgan für ein Schubumluftventil nach einem der vorhergehenden Ansprüche,
**dadurch gekennzeichnet, dass**
die beiden Hohlkörper (42, 44) und/oder das Verbindungselement (72) als Tiefziehteile aus Blech hergestellt sind.

14. Verstellorgan für ein Schubumluftventil nach einem der vorhergehenden Ansprüche,
**dadurch gekennzeichnet, dass**
die beiden Hohlkörper (42, 44) aneinander und/oder das Verbindungselement (72) am Betätigungsglied (32) durch Schweißen, Kleben, Bördeln oder Krimpen befestigt sind.

## Claims

1. An adjustment element for a divert-air valve, comprising
an actuation element (32) which is movable in a translatory fashion,
and a control body (40) which is movable with the actuation element (32),
**characterized in that**
the control body (40) comprises a first hollow body (42) having a circumferentially closed outer surface (46) from the first axial end of which an annular plate (48) extends radially inward, and a second hollow body (44) having a radially outer annular plate (54) which is sealingly fastened in encircling fashion axially to the annular plate (48) of the first hollow body (42) and from the radially inner region of which an outer surface (56) extends in the direction of the actuation element (32) in the interior of the first hollow body (42).

2. The adjustment element for a divert-air valve according to claim 1,
**characterized in that**
the outer surface (46) of the first hollow body (42) is cylindrical.

3. The adjustment element for a divert-air valve according to claim 1,
**characterized in that**
the outer surface (56) of the first hollow body (42) is designed with a conically widening shape in the direction toward the actuation element (32).

4. The adjustment element for a divert-air valve according to any one of the preceding claims,
**characterized in that**
at least one opening (64) is formed in the outer surface (56) of the second hollow body (44).

5. The adjustment element for a divert-air valve according to any one of the preceding claims,
**characterized in that**
the control body (40) is fixedly connected to the actuation element (32).

6. The adjustment element for a divert-air valve according to claim 5,
**characterized in that**
the actuation element (32) has a connection element (72) fastened to it which extends into the interior of the second hollow body (44) and which, on its end facing away from the actuation element (32), comprises a radially widened portion (80), and the second hollow body (44) comprises a corresponding radial constriction (66) arranged axially between the actuation element (32) and said radially widened portion (80) of the connection element (72), wherein the outer circumference of said radially widened portion (80) of the connection element (72) is larger than the inner circumference of the radial constriction (66) of the second hollow body (44).

7. The adjustment element for a divert-air valve according to claim 6,
**characterized in that**
the connection element (72) is fastened in a central recess (76) on the actuation element (32), the diameter of said central recess corresponding to the outer diameter of the connection element (72) in the region extending into the recess (76).

8. The adjustment element for a divert-air valve according to claim 6 or 7,
**characterized in that**
an elastomer (70) is arranged between the connection element (72) and the second hollow body (44).

9. The adjustment element for a divert-air valve according to claim 8,
**characterized in that**
the elastomer (70) extends from the actuation element (32) up to the radially widened portion (80) of the connection element (72) and fills a space (82) that is located axially between the radial constriction (66) of the second hollow body (44) and the radially widened portion (80) of the connection element (72).

10. The adjustment element for a divert-air valve according to any one of claims 5 to 9,
**characterized in that**
the second hollow body (44) is formed with a plurality of openings (64), distributed along the circumference, in a region between the radial constriction (80) of the second hollow body (44) and the annular plate (54) of the second hollow body (44).

11. The adjustment element for a divert-air valve according to any one of the preceding claims,
**characterized in that**
on the side of the annular plate (54) of the second hollow body (44) remote from the actuation element (32), a sealing ring (58) is fastened whose diameter corresponds to the largest diameter of the first hollow body (42).

12. The adjustment element for a divert-air valve according to any one of the preceding claims,
**characterized in that,**
radially between the two hollow bodies (42,44), a spring (94) is arranged which bears in an axially biased state onto the radially inward extending plate (48) of the first hollow body (42).

13. The adjustment element for a divert-air valve according to any one of the preceding claims,
**characterized in that**
the two hollow bodies (42,44) and/or the connection element (72) are produced as deep-drawn parts from sheet metal.

14. The adjustment element for a divert-air valve according to any one of the preceding claims,
**characterized in that**
the two hollow bodies (42,44) are fastened to each other and/or the connection element (72) is fastened to the actuation element (32) by welding, bonding, flanging or crimping.

## Revendications

1. Organe de réglage pour soupape de suppression, avec
un élément actionneur (32) mobile en translation,
et un corps de réglage (40) mobile en conjonction avec l'élément actionneur (32),
**caractérisé en ce que**
le corps de réglage (40) comprend un premier corps creux (42) avec un surface enveloppante fermée sur la circonférence, une plaque (48) s'étendant radialement vers l'intérieur à partir de sa première extrémité axiale, et le corps de réglage comprend un deuxième corps creux (44) avec une plaque annulaire (54) radialement extérieure, qui est montée à la plaque annulaire (48) du premier corps creux (42) de manière étanche sur la circonférence et, à partir de sa région radialement intérieure, une surface enveloppante (56) s'étend vers l'élément actionneur (32) dans l'intérieur du premier corps creux (42).

2. Organe de réglage pour soupape de suppression selon la revendication 1, **caractérisé en ce que** la surface enveloppante (46) premier corps creux (42) est cylindrique.

3. Organe de réglage pour soupape de suppression selon la revendication 1, **caractérisé en ce que** la surface enveloppante (46) premier corps creux (42) s'élargit de manière conique vers l'élément actionneur (32).

4. Organe de réglage pour soupape de suppression selon l'une quelconque des revendications précédentes, **caractérisé en ce qu'**au moins une ouverture (64) est formée dans la surface enveloppante (56) du deuxième corps creux (44).

5. Organe de réglage pour soupape de suppression selon l'une quelconque des revendications précédentes, **caractérisé en ce que** le corps de réglage (40) est rigidement relié à l'élément actionneur (32).

6. Organe de réglage pour soupape de suppression selon la revendication 5, **caractérisé en ce qu'**un élément de liaison (72) est fixé sur l'élément actionneur (32), ledit élément de liaison s'étendant dans l'intérieur du deuxième corps creux (44) et comportant un élargissement radial (80) à son extrémité détournée de l'élément actionneur (32), et le deuxième corps creux (44) comportant un rétrécissement (66) radial correspondant qui est disposé axialement entre l'élément actionneur (32) et l'élargissement radial (80) de l'élément de liaison (72), la circonférence extérieure dudit élargissement radial (80) de l'élément de liaison (72) étant supérieure à la circonférence intérieure dudit rétrécissement (66) radial du deuxième corps creux (44).

7. Organe de réglage pour soupape de suppression selon la revendication 6, **caractérisé en ce que** ledit élément de liaison (72) est fixé dans un évidement (76) central au ledit élément de liaison (72), le diamètre dudit évidement correspondant au diamètre extérieur dudit élément de liaison (72) dans la partie saillant dans ledit évidement (76).

8. Organe de réglage pour soupape de suppression selon l'une des revendications 6 ou 7, **caractérisé en ce qu'**un élastomère (70) est disposé entre ledit élément de liaison (72) et le deuxième corps creux (44).

9. Organe de réglage pour soupape de suppression selon la revendication 8, **caractérisé en ce que** ledit élastomère (70) s'étend dudit élément actionneur (32) jusqu'à l'élargissement radial (80) de l'élément de liaison (72) et remplit un espace disposé axialement entre ledit rétrécissement (66) radial du deuxième corps creux (44) et l'élargissement radial (80) de l'élément de liaison (72).

10. Organe de réglage pour soupape de suppression selon l'une des revendications 5 à 9, **caractérisé en ce que**, dans ledit deuxième corps creux (44), plusieurs ouvertures (64) reparties sur la circonférence sont formées dans une région entre l'élargissement radial (80) de l'élément de liaison (72) et la plaque annulaire (54) du deuxième corps creux (44).

11. Organe de réglage pour soupape de suppression selon l'une quelconque des revendications précédentes, **caractérisé en ce qu'**une bague d'étanchéité (58) est fixée au côté distant dudit élément actionneur (32) de la plaque annulaire (54) du deuxième corps creux (44), le diamètre de la bague correspondant au diamètre le plus grand die premier corps creux (42).

12. Organe de réglage pour soupape de suppression selon l'une quelconque des revendications précédentes, **caractérisé en ce qu'**un ressort (94) est disposé radialement entre les deux corps creux (42, 44), le ressort restant, en état sollicité dans la direction axiale, sur la plaque (48) dudit premier corps creux (42) qui s'étend radialement vers l'intérieur.

13. Organe de réglage pour soupape de suppression selon l'une quelconque des revendications précédentes, **caractérisé en ce que** les deux corps creux (42, 44) et/ou ledit élément de liaison (72) sont fabriqués comme pièce embouties de tôle.

14. Organe de réglage pour soupape de suppression selon l'une quelconque des revendications précédentes, **caractérisé en ce que** les deux corps creux (42, 44) sont fixés l'un à l'autre et/ou ledit élément de liaison (72) est fixé audit élément actionneur (32) par soudage, collage, bordage ou sertissage.
